# EUROPÄISCHE PATENTSCHRIFT

(11) **EP 4 323 594 B1**
(45) Veröffentlichungstag und Bekanntmachung des Hinweises auf die Patenterteilung: **21.05.2025**
(21) Anmeldenummer: 22714869.9
(22) Anmeldetag: 17.03.2022
(51) Int. Cl.: E03F 5/04

(54) **ADAPTER FÜR EINE ABLAUFVORRICHTUNG**
ADAPTER FOR A DRAINAGE DEVICE
ADAPTATEUR POUR DISPOSITIF DE DRAINAGE

(43) Veröffentlichungstag der Anmeldung: 21.02.2024
(73) Patentinhaber: wedi GmbH, 48282 Emsdetten (DE)
(72) Erfinder: WEDI, Stephan, 48282 Emsdetten (DE)
(74) Vertreter: Dr. Träger & Strautmann PAe PartG mbB
(86) Internationale Anmeldenummer: PCT/EP2022/056935
(87) Internationale Veröffentlichungsnummer: WO 2023/174540

(56) Entgegenhaltungen:
- DE-A1- 102019 110 322
- KR-A- 20110 011 043
- KR-B1- 101 029 111
- KR-B1- 101 029 111
- US-A- 2 318 575

## Beschreibung

Die Erfindung betrifft einen Adapter für eine Ablaufvorrichtung nach dem Oberbegriff des Anspruchs 13, sowie einen Bodenablauf mit einem solchen Adapter. Derartige Adapter dienen dazu, einen in einer Bodenfläche installierten Ablaufkörper mit einem sich anschließenden Rohrleitungssystem zu verbinden.

Aus DE 10 2019 110 322 A1 ist ein an einen Ablaufkörper montierbarer Adapter bekannt, welcher eine Verbindung zwischen dem genannten Ablaufkörper und einem Rohrleitungssystem herstellt. Abwasser, das zunächst im Ablaufkörper gesammelt wird, wird somit durch den Adapter in das Rohrleitungssystem geleitet. Die Abdichtung des Adapters gegenüber der Rohrleitung erfolgt mittels einer speziellen Dichtung, die eine ringförmige Außenkontur aufweist, welche in einer am Adapter vorgesehenen Kontur einsteckbar ist. Um den Adapter an die Rohrleitung zu koppeln, kann zunächst die Dichtung auf das Ablaufrohr gesteckt werden. Anschließend wird der Adapter aufgesteckt.

Die Dichtung hat einen oberen, nach innen weisenden Kragen, der das Rohrende des Ablaufrohrs im montierten Zustand von außen nach innen überragt. An der Unterseite der Dichtung befindet sich weiterhin ein Kragen, in den ein aus dem Ablaufkörper heraustretender Rohrstutzen einsteckbar ist. Weiterhin umfasst die Dichtung flexible Dichtlippen, die sich beim Aufstecken des Adapters auf das Ablaufrohr an dessen Außenwandung anschmiegen. Die Dichtlippen üben einerseits eine relativ geringe Anpresskraft auf das Ablaufrohr aus und dichten es andererseits auch ab. Dabei ist der von der Dichtung auf das Ablaufrohr ausgeübte Druck abhängig vom Dichtungsmaterial und der Enge der Passung: Je enger die Passung und je härter das Dichtungsmaterial ist, desto höher ist zwar der von den Dichtlippen auf das Ablaufrohr ausgeübte Druck, desto schwieriger wird aber gleichzeitig auch die Montage des Adapters auf dem Ablaufrohr.

Aufgabe der Erfindung ist es, die beschriebenen Nachteile zu beseitigen und einen Adapter vorzuschlagen, der einfach zu montieren ist und eine feste, aber dennoch bei Bedarf einfach lösbare Verbindung von Ablaufrohr und Ablaufkörper realisiert.

Diese Aufgabe wird gelöst durch einen Adapter mit den Merkmalen des Anspruchs 1.

Der erfindungsgemäße Adapter ist für eine Ablaufvorrichtung vorgesehen, bei der es sich vorzugsweise um eine Duschboden-Ablaufvorrichtung handeln kann. Die Ablaufvorrichtung umfasst eine Aufnahme, die in eine Bodenplatte einbaubar ist und ein strömungstechnisch mit der Aufnahme verbindbares Ablaufrohr. Unter der Aufnahme wird somit ein Bauteil verstanden, das in die Bodenplatte einbaubar ist und dort eine Art Wassereinlaufgehäuse bildet.

Der Adapter selbst umfasst folgende Bauteile:
- ein Basisteil, welches eine erste Koppelstelle zum Ablaufrohr und eine zweite Koppelstelle zur Aufnahme aufweist und im montierten Zustand die Aufnahme an das Ablaufrohr koppelt,
- einen in das Basisteil einbaubaren Dichtring zur Abdichtung des Adapters gegenüber dem Ablaufrohr,
- einen Pressring zur Ausübung einer Druckkraft auf den Dichtring.

Der Dichtring besteht aus einem verformbaren, flexiblen Material, beispielsweise einem Kunststoff oder Gummi. Vorzugsweise ist im Basisteil eine zum Dichtring kompatible Aufnahme, beispielsweise eine Nut, vorgesehen. In eine solche Nut lässt sich der Dichtring leicht einlegen und sicher am vorgesehenen Einbauort fixieren. Alternativ oder zusätzlich zu einer Nut kann das Basisteil auch einen unteren Kragen aufweisen, auf dessen Kontur sich der in das Basisteil eingebrachte Dichtring abstützen kann.

Zwischen Dichtring und Ablaufrohr ist im unbelasteten Zustand des Dichtrings eine Spielpassung vorgesehen, die so bemessen ist, dass sich der Adapter mit eingebautem Dichtring einfach auf das Ablaufrohr aufstecken lässt. In diesem Zustand übt der Dichtring noch keine Dichtfunktion aus. Die Abdichtung wird vielmehr erst dadurch realisiert, dass der Dichtring im Adapter mittels einer auf den Dichtring ausgeübten Kraft so verformt wird, dass er einen zwischen Ablaufrohr und Adapter ausgebildeten Spalt nicht nur verschließt, sondern mit hoher Druckkraft in diesem Spalt verformt bzw. gequetscht wird.

Die auf den Dichtring ausgeübte Kraft wird aufgebracht, indem der Pressring in das Basisteil eingeschraubt wird. Das Einschrauben des Pressrings in das Basisteils erfolgt vorzugsweise nicht manuell, sondern mit einem geeigneten Werkzeug, da mit einem Werkzeug ein höheres Drehmoment in den Pressring und damit auch eine höhere Druckkraft auf den Dichtring ausübbar ist. Durch das Einschrauben des Pressrings nähert sich dessen Unterseite dem Dichtring immer weiter an, bis Pressring und Dichtring einander schließlich kontaktieren. Wird der Eindrehvorgang fortgesetzt, drückt der Pressring auf den Dichtring, verformt diesen und stellt die gewünschte Pressverbindung zwischen Ablaufrohr und Adapter her. Da im Zuge dieses Pressvorgangs der zwischen Ablaufrohr und Adapter vorhandene Spalt vollständig vom verformten Dichtring ausgefüllt wird, werden Ablaufrohr und Adapter zudem sicher abgedichtet.

Vorzugsweise wird der Pressring nicht mittels eines externen Werkzeugs in das Basisteil eingedreht, sondern mittels eines in den Adapter integrierten Einsatzteils. Bei diesem Einsatzteil kann es sich um ein oberhalb des Pressrings in das Basisteil einbaubares Teil handeln, das zum Spannen des in das Basisteil eingebauten Dichtrings vorgesehen ist. Der Pressring und das Einsatzteil weisen vorzugsweise zueinander kompatible Verbindungselemente zur Herstellung einer formschlüssigen Verbindung auf. Hierdurch kann das zum Eindrehen des Pressrings erforderliche Drehmoment sehr einfach zunächst auf das Einsatzteil ausgeübt und dann von diesem auf den Pressring übertragen werden. Der Dichtring ist somit mittels der Kombination aus Pressring und Einsatzteil besonders einfach und mit hoher Druckkraft gegen das Ablaufrohr andrückbar. Bei den kompatiblen Verbindungselementen kann es sich beispielsweise um eine Art Verzahnung handeln.

Zwischen Pressring und Einsatzteil ist vorzugsweise eine enge Spielpassung vorgesehen, so dass sich das Einsatzteil einerseits einfach vom Pressring trennen lässt, andererseits aber auch ein am Einsatzteil angreifendes Drehmoment sicher auf den Pressring übertragbar ist.

In einer bevorzugten Ausführungsform ist zwischen Dichtring und Pressring ein Spacer vorgesehen. Unter einem Spacer wird ein rohrartiges Teil verstanden, das in das Basisteil des Adapters einsteckbar ist und eine Art Abstandshalter zwischen Pressring und Dichtring bildet. Im Adapter befindet sich der Spacer im montierten Zustand zwischen Dichtring und Pressring. Durch die Eindrehbewegung des Pressrings wird der Spacer auf den Dichtring gedrückt. Der sich beim Eindrehen drehende Pressring reibt somit mit seiner Unterseite nicht unmittelbar auf dem flexiblen Dichtring, sondern auf der Oberseite des Spacers. Vorzugsweise dreht der Spacer selbst sich trotz der Drehbewegung des Pressrings nicht oder nur unwesentlich. Der Spacer wird somit linear in Richtung Pressring verschoben.

Die Oberseite des Spacers ist so konzipiert, dass sie durch die genannte Dreh-Reibung des Pressrings nicht beschädigt wird. Vereinfacht gesagt, komprimiert der sich linear bewegende Spacer den Dichtring lediglich, reibt aber nicht am Dichtring entlang.

In einer bevorzugten Ausführungsform umfasst der Spacer eine Dichtung zur zusätzlichen Abdichtung des Adapters gegenüber dem Ablaufrohr. Die Abdichtung erfolgt somit zum einen durch den komprimierbaren Dichtring und zum anderen durch die am Spacer vorgesehene Dichtung. Diese am Spacer vorgesehene Dichtung hat einen Innendurchmesser, der geringfügig kleiner ist, als der Außendurchmesser des Ablaufrohrs. Die Dichtung bildet somit beim Aufstecken des Adapters auf das Ablaufrohr eine Führung. Zudem verschließt die Dichtung bei bündig eingestecktem Ablaufrohr eine zwischen Ablaufrohr und Gehäuse verbleibende Lücke. Neben der verbesserten Optik kann dort somit auch kein Abwasser eindringen und stehen bleiben, so dass unangenehme Gerüche vermieden werden.

Vorzugsweise ist die im Spacer angebrachte Dichtung eingeklebt. Sie kann bei der Montage somit weder vergessen noch falsch montiert werden.

Der Spacer kann wenigstens eine Soll-Trennstelle aufweisen, an der er teilbar ist. Vorzugsweise kann der rohrartig ausgebildete Spacer zwei Soll-Trennstellen umfassen, mittels derer er in zwei schalenartige Hälften teilbar ist. Eine solche Teilung ermöglicht den nachträglichen Einbau eines Spacers in einen Adapter auch dann, wenn eine oberhalb des Adapters in der Bodenplatte angeordnete Aufnahme oder ein auf der Aufnahme befindliches Bauteil der Ablaufvorrichtung, beispielsweise ein schmaler Rinnenablauf, lediglich einen Durchlass zum Ablaufrohr aufweist, der kleiner ist, als der Durchmesser des Spacers.

Zwar wird der Spacer üblicherweise vor dem Zusammenbau des Adapters in den Adapter eingesetzt, jedoch kann es vorkommen, dass bei der Montage der Einbau des Spacers vergessen wird. Um das Hindurchschieben des Spacers auch durch eine in der Aufnahme vorgesehene Öffnung zu ermöglichen, die kleiner als der Durchmesser des Spacers ist, wird der Spacer an den vorgesehenen Soll-Trennstellen in vorzugsweise zwei Teile geteilt. Die beiden so entstandenen Halbschalen können nacheinander durch die Öffnung des Einlaufgehäuses gesteckt und anschließend im Adapter oberhalb des Dichtrings an der vorgesehenen Stelle positioniert werden.

In Fällen, in denen die Öffnung des Einlaufgehäuses lediglich minimal kleiner ist als der Spacer, kann es auch ausreichend sein, den Spacer lediglich an einer Soll-Trennstelle zu trennen. Ein so aufgesplitteter Spacer lässt sich spiralförmig verdrehen und in einem Stück von oben durch die Öffnung des Einlaufgehäuses in den Adapter schieben.

Die erste Koppelstelle, die den Adapter mit dem Ablaufrohr verbindet, wird wie bereits erläutert dadurch ausgebildet, dass der Pressring in die Aufnahme eingedreht wird und infolgedessen den Dichtring komprimiert und zwischen Aufnahme und Ablaufrohr verpresst. Pressring und Aufnahme umfassen somit jeweils ein Gewinde. Um diese beiden Gewinde beim Eindrehen in der richtigen Stellung zueinander zu positionieren und ein schiefes Aufsetzen des mit dem Außengewinde versehenen Teils gegenüber dem mit dem Innengewinde versehenen Teils zu verhindern, kann ein in die Gewindeverbindung - und damit auch in die Koppelstelle - integrierter Bajonettverschluss vorgesehen sein.

Ein Bajonettverschluss ist eine schnell herstell- und lösbare mechanische Verbindung zweier zylindrischer Teile in ihrer Längsachse. Die Teile werden durch Ineinanderstecken und entgegengesetztes Drehen verbunden und so auch wieder getrennt. Bei einem in ein Gewinde integrierten Bajonettverschluss werden die beiden Bauteile zur korrekten Positionierung zunächst entgegen der Gewinde-Drehrichtung mit wenig Andrückkraft gedreht. In einer vordefinierten Stellung der beiden Teile zueinander ist der Gewindegang unterbrochen und das mit dem Außengewinde versehene Teil gleitet in Richtung Gewinde-Längsachse über das mit dem Innengewinde versehene Teil. Vereinfacht gesagt, rasten die beiden Gewinde ineinander ein und werden hierdurch in der richtigen Stellung zueinander positioniert. Im Anschluss daran kann die Drehrichtung gewechselt und das Innengewinde in das Außengewinde eingedreht werden.

In einer bevorzugten Ausführungsform kann das Einsatzteil Öffnungen zum Auffangen von im Abwasser vorhandenen Verunreinigungen, beispielweise Haare, umfassen und somit eine siebartige Wirkung haben. Das Einsatzteil hat hierdurch eine Doppelfunktion: Zum einen dient es dazu, ein Drehmoment auf den Pressring zu übertragen und die Pressverbindung von Adapter und Ablaufrohr herzustellen, zum anderen dient es dazu Fremdkörper nicht in das Ablaufrohr gelangen zu lassen und damit die Gefahr von Rohrverstopfungen zu reduzieren.

Vorzugsweise umfasst das Einsatzteil eine Aufnahme für ein Werkzeug, insbesondere einen Schraubendreher, so dass das Einsatzteil mittels eines Werkzeuges in den Adapter ein- bzw. ausdrehbar ist. Bei dieser Aufnahme kann es sich beispielsweise um einen Schlitz, einen Kreuzschlitz oder einen Torx-Anschluss handeln. Die Aufnahme ist vorzugsweise in der Mittelachse des Einsatzteiles angebracht, so dass ein mit dem Werkzeug über die Aufnahme in das Einsatzteil eingebrachtes Drehmoment gleichmäßig auf den an das Einsatzteil gekoppelten Pressring übertragbar ist. Besonders vorteilhaft ist somit, dass zum Eindrehen des Einsatzteiles keine Spezialwerkzeuge erforderlich sind.

Die zweite Koppelstelle, die den Adapter mit der Aufnahme und damit mit dem Wassereinlaufgehäuse verbindet, wird vorzugsweise durch eine Gewindeverbindung ausgebildet. Hierzu kann am Adapter ein Gewinde vorgesehen sein, welches zu einem an der Aufnahme angebrachten Gewinde kompatibel ist. Vorzugsweise umfasst diese Schraubverbindung eine Dichtung, die beim Eindrehen des Adapters in die Aufnahme komprimiert wird und den Übergangsbereich vom Adapter zur Aufnahme abdichtet.

Analog zur ersten Koppelstelle kann auch die zweite Koppelstelle einen Bajonettverschluss umfassen. Hierzu kann das Gewinde des Adapters als ein erster Teil eines Bajonettverschlusses ausgebildet sein, der zu einem an der Aufnahme angebrachten zweiten Teil des Bajonettverschlusses kompatibel ist. Hierdurch ergeben sich die bereits im Zusammenhang mit dem Bajonettverschluss der ersten Koppelstelle beschriebenen Vorteile einer einfachen und achsgleichen Positionierung der Bauteile zueinander.

Die zweite Koppelstelle kann an einem der beiden Bauteile, nämlich dem Adapter oder der Aufnahme, zudem eine Raste umfassen, die in eine hierzu kompatible Vertiefung des anderen Bauteils einrastbar ist. Bei Erreichen einer vordefinierten Eindrehtiefe der Gewindeverbindung gelangen Raste und Vertiefung in einer zueinander kompatiblen Position. Die vorzugsweise elastische und beim Eindrehen der Gewinde in einer vorgespannten Stellung befindliche Raste entspannt sich in dieser Position und rastet in die Vertiefung ein. Hierdurch wird der in die Aufnahme eindrehbare Adapter fixiert und kann erst dann wieder aus der Aufnahme herausgedreht werden, wenn die Raste bewusst und in der Regel unter Zuhilfenahme eines hebelartigen Werkzeuges aus der Vertiefung herausgedrückt wird. Erst dann ist die Demontage des Adapters aus der Aufnahme möglich.

Die Raste bildet somit eine Sicherung gegen unabsichtliches Herausdrehen. Ein solches unabsichtliches Herausdrehen kann erfolgen, wenn andere Teile der Ablaufvorrichtung, die ebenfalls eine Gewindeverbindung umfassen, gelöst werden sollen und das eingebrachte Drehmoment ganz oder teilweise nicht auf das zu lösende Gewinde, sondern auf die Gewindeverbindung von Aufnahme und Adapter übertragen wird.

Erfindungsgemäß umfassen die erste Koppelstelle zur Verbindung des Adapters mit dem Ablaufrohr und die zweite Koppelstelle zur Verbindung des Adapters mit der Aufnahme je ein gegenläufig ausgerichtetes Gewinde.

Hierdurch wird nicht nur verhindert, dass beim Festdrehen einer Koppelstelle die andere Koppelstelle gelöst wird, sondern es wird im Gegenteil die eine Koppelstelle zusätzlich festgedreht, wenn ein Drehmoment in die andere Koppelstelle eingebracht wird.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt eine in eine Bodenplatte eingebaute Ablaufvorrichtung in einer perspektivischen Schnittdarstellung;
- Fig. 2: zeigt die Bodenplatte mit Ablaufvorrichtung gemäß Fig. 1 in einer Seitenansicht im Schnitt;
- Fig. 3: zeigt eine Bodenplatte und eine in die Bodenplatte einbaubare Ablaufvorrichtung in einer Explosionsdarstellung;
- Fig. 4: zeigt einige Komponenten der Ablaufvorrichtung, die gemeinsam eine Justiereinrichtung bilden in einer geschnittenen Seitenansicht;
- Fig. 5: zeigt eine Ausschnittsvergrößerung aus Fig. 4;
- Fig. 6: zeigt die Komponenten gemäß Fig. 4 in einer geschnittenen perspektivischen Ansicht;
- Fig. 7: zeigt eine Ausschnittsvergrößerung aus Fig. 6;
- Fig. 8: zeigt ein Fixierelement in Form eines Rastrings in einer Ansicht von oben;
- Fig. 9: zeigt das Fixierelement gemäß Fig. 8 in einer Ansicht von unten;
- Fig. 10: zeigt ein Aufstockelement für eine Abdeckung in einer perspektivischen Ansicht;
- Fig. 11: zeigt einen Halter für das in Fig. 10 gezeigte Aufstockelement in einer perspektivischen Ansicht;
- Fig. 12: zeigt eine in eine Bodenplatte eingebaute Aufnahme in einer perspektivischen Ansicht;
- Fig. 13: zeigt die Aufnahme gemäß Fig. 12 mit eingebautem Halter gemäß Fig. 11 in einer perspektivischen Ansicht;
- Fig. 14: zeigt die Aufnahme mit Halter und Rastring im vormontierten Zustand in einer perspektivischen Ansicht;
- Fig. 15: zeigt einen an eine Aufnahme gekoppelten Adapter in einer perspektivischen Darstellung;
- Fig. 16: zeigt den an die Aufnahme gekoppelten Adapter gemäß Fig. 15 in einer perspektivischen Schnittdarstellung;
- Fig. 17: zeigt das Basisteil des Adapters in einer perspektivischen Darstellung;
- Fig. 18: zeigt das Basisteil des Adapters gemäß Fig. 17 in einer perspektivischen Schnittdarstellung;
- Fig. 19: zeigt den Spacer des Adapters in einer perspektivischen Darstellung;
- Fig. 20: zeigt den Spacer des Adapters gemäß Fig. 19 in einer perspektivischen Schnittdarstellung;
- Fig. 21: zeigt den Dichtring des Adapters in einer perspektivischen Darstellung;
- Fig. 22: zeigt den Pressring des Adapters in einer perspektivischen Darstellung;
- Fig. 23: zeigt ein in einen Adapter einsetzbares Einsatzteil.
Gleiche oder ähnliche Elemente können in den nachfolgenden Figuren mit gleichen oder ähnlichen Bezugszeichen versehen sein.

Die in den Figuren dargestellten Ausführungsbeispiele haben nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten, die der Ablaufvorrichtung, die der Anordnung im Betriebsmodus entspricht.

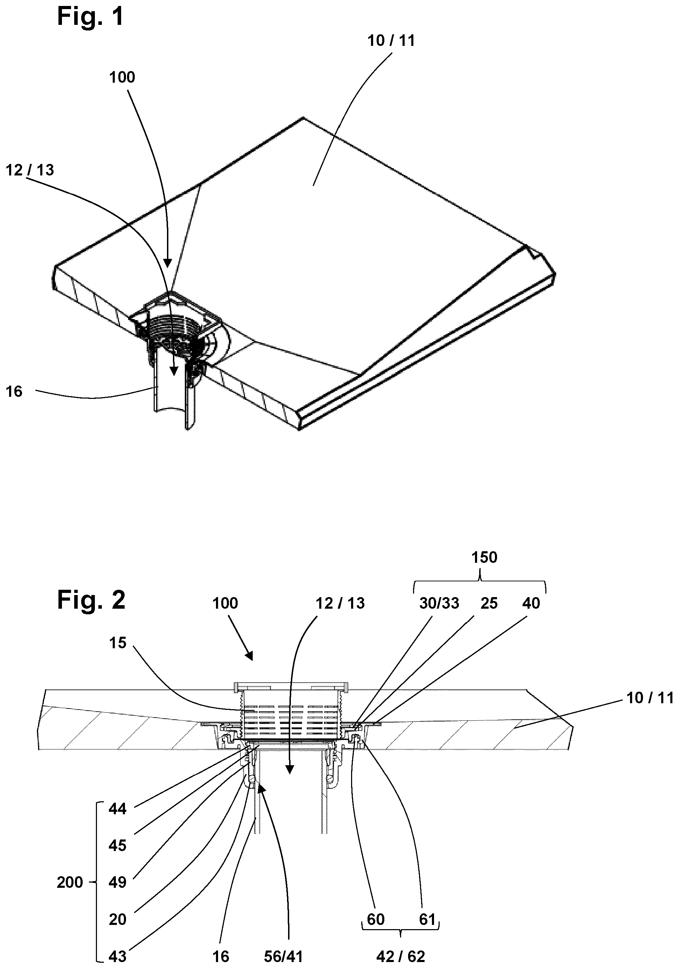

Figur 1 zeigt eine in eine Bodenplatte 10 eingebaute Ablaufvorrichtung 100 in einer Schnittdarstellung. Bei der Bodenplatte 10 handelt es sich im dargestellten Ausführungsbeispiel um eine Duschbodenplatte 11, die ein in Richtung einer Einlauföffnung 13 weisendes Gefälle aufweist. Durch die Einlauföffnung 13 eintretendes Abwasser wird einem sich an die Ablaufvorrichtung 100 anschließenden Rohrsystem 16 zugeführt.

Bei dem dargestellten Ausführungsbeispiel handelt es sich um eine in einen Sanitärraum eingebauten Ablaufvorrichtung 100, die in eine Öffnung 12 der Duschbodenplatte 11 eingebaut ist. Die gezeigte Ablaufvorrichtung 100 umfasst keinen in den Ablauftopf integrierten Geruchsverschluss. Bei anderen Ausführungsbeispielen kann auch vorgesehen sein, dass die Ablaufvorrichtung selbst einen Geruchsverschluss umfasst.

Figur 2 zeigt die Duschbodenplatte 11 mit der Ablaufvorrichtung 100 in einer Schnittdarstellung. Auf das Ablaufrohr 16 ist ein Adapter 200 aufgesteckt und an einer ersten Koppelstelle 41 mittels einer Pressverbindung 56 fixiert. An einer zweiten Koppelstelle 42 ist der Adapter 200 mittels einer Schraubverbindung 62 mit einer Aufnahme 40 verschraubt. In die Schraubverbindung 62 ist ein Bajonettverschluss 63 integriert. Der Bajonettverschluss 63 erleichtert die Ausrichtung der miteinander zu verschraubenden Bauteile.

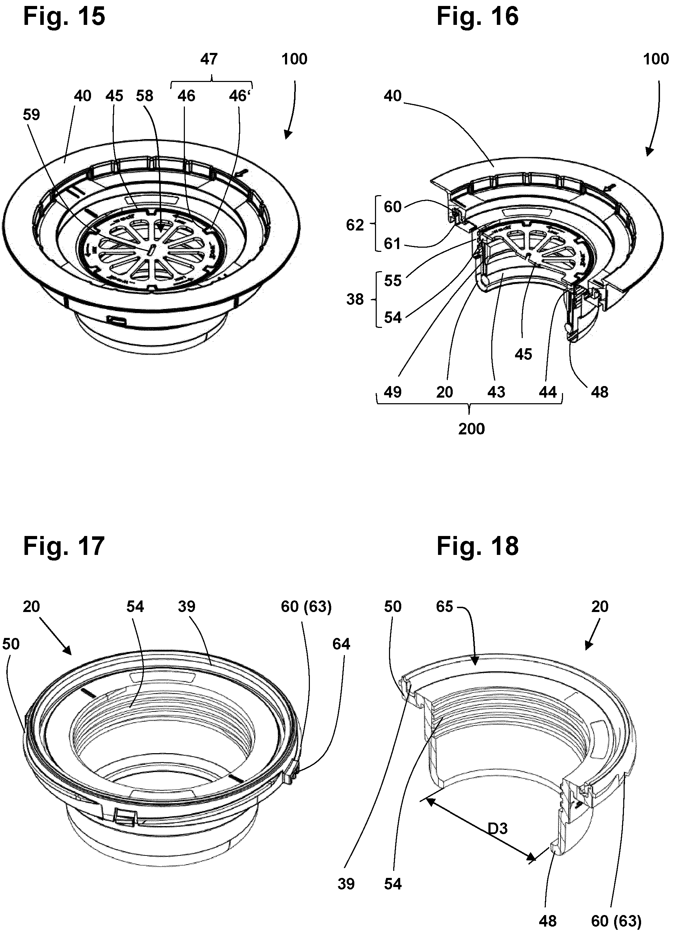

Weitere Details des Adapters 200 werden weiter unten im Zusammenhang mit den Figuren 15 bis 23 näher erläutert.

Die Aufnahme 40 bildet gemeinsam mit einem Halter 25 und einem Fixierelement 30, bei dem es sich im vorliegenden Fall um einen Rastring 33 handelt, eine Justiereinrichtung 150. Der Halter 25 der Justiereinrichtung 150 ist über ein Gewinde mit einem Aufstockelement 15 verbunden. Auf dem Aufstockelement 15 kann ein Zwischenträger 66 angeordnet sein, auf dem eine Abdeckung 14 zum Verschließen der Einlauföffnung 13 vorgesehen ist. Die Abdeckung 14 ist zur Durchführung von Reinigungs- und Wartungsarbeiten abnehmbar. Im fertigmontierten Zustand ist die Oberfläche der Abdeckung 14 vorzugsweise bündig zur Oberfläche eines auf dem Duschboden 11 angebrachten Belages, bei dem es sich beispielsweise um Bodenfliesen handeln kann, ausgerichtet.

Die Bündigkeit von Abdeckung 14 zur Oberfläche des Duschbodenbelages wird beim Einbau des Duschbodens 11 einjustiert. In Figur 2 ist zu sehen, dass das Aufstockelement 15 die Oberfläche des Duschbodens 11 deutlich überragt. Das liegt daran, dass die Höhe des Aufstockelements 15 im Ausgangsstadium zunächst sehr großzügig dimensioniert ist, um auch die Verwendung dicker Bodenbeläge zu ermöglichen. Um die Höhe des Aufstockelements 15 grob an die Höhe eines ausgewählten Bodenbelages anzupassen, wird das Aufstockelement 15 deshalb zunächst an seiner Unterseite so eingekürzt, dass es in etwa an die Höhe des ausgewählten Bodenbelages angepasst ist. Die millimeter- oder sogar zehntelmillimetergenaue Höhen-Feinjustierung erfolgt nach Aufbringen des Bodenbelages mittels der Gewindeverbindung von Aufstockelement 15 und Halter 25.

Die Justiereinrichtung 150 ermöglicht zum einen die beschriebene Höhenausrichtung und zum anderen eine horizontale Justierung der Abdeckung 14 zur gleichmäßigen Ausrichtung gegenüber den die Abdeckung 14 umgebenden Fugen.

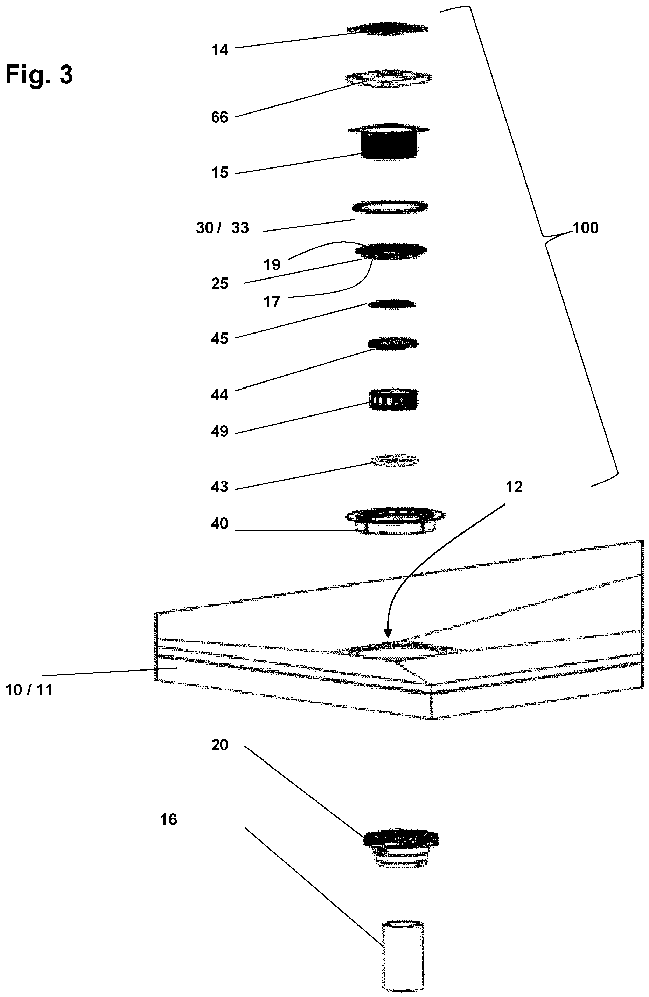

Figur 3 zeigt die Bauteile der Ablaufvorrichtung 100 in einer Explosionsdarstellung. Die Abdeckung 14 ist vorzugsweise formschlüssig auf einen im dargestellten Ausführungsbeispiel vorgesehenen Zwischenträger 66 auflegbar. Der Zwischenträger 66 kann ebenfalls Formschluss-Konturen aufweisen und somit formschlüssig auf das Aufstockelement 15 auflegbar sein.

Das Aufstockelement 15 weist ein Außengewinde 17 auf, dass in ein Innengewinde 29 des Halters 25 einschraubbar ist.

Der Halter 25 wird in einem vormontierten Zustand Z1 in einer gehäuseartigen Struktur gehalten und ist in dieser gehäuseartigen Struktur beweglich. Die gehäuseartige Struktur befindet sich in einem Bereich zwischen dem Fixierelement 30 - im vorliegenden Fall: dem Rastring 33 - und der Aufnahme 40.

Im dargestellten Ausführungsbeispiel ist die Aufnahme 40 von oben in die Öffnung 12 der Bodenplatte 10 einlegbar. Zur Montage der Ablaufvorrichtung 100 werden auch der Halter 25, der Rastring 33, das Aufstockelement 15, der Zwischenträger 66 und die Abdeckung 14 von oben in die Ablaufvorrichtung 100 eingesetzt und sind bei Bedarf, beispielsweise für Reinigungsarbeiten, einfach demontierbar.

Dahingegen wird ein am Adapter 200 vorgesehenes Basisteil 20 zunächst von unten an der bereits in die Bodenplatte 10 eingesetzten Aufnahme 40 befestigt. Anschließend ist die Bodenplatte 10 mit eingesetzter Aufnahme 40 und dem an der Unterseite der Aufnahme 40 befestigten Basisteil 20 des Adapters 200 auf das Ablaufrohr 16 aufsteckbar. Die Fixierung des Basisteils 20 auf dem Ablaufrohr 16 erfolgt mittels der Pressverbindung 56, die durch den Dichtring 43, den Spacer 49, den Pressring 44 und das Einsatzteil 45 gebildet wird. Die genaue Funktionsweise wird weiter unten näher erläutert.

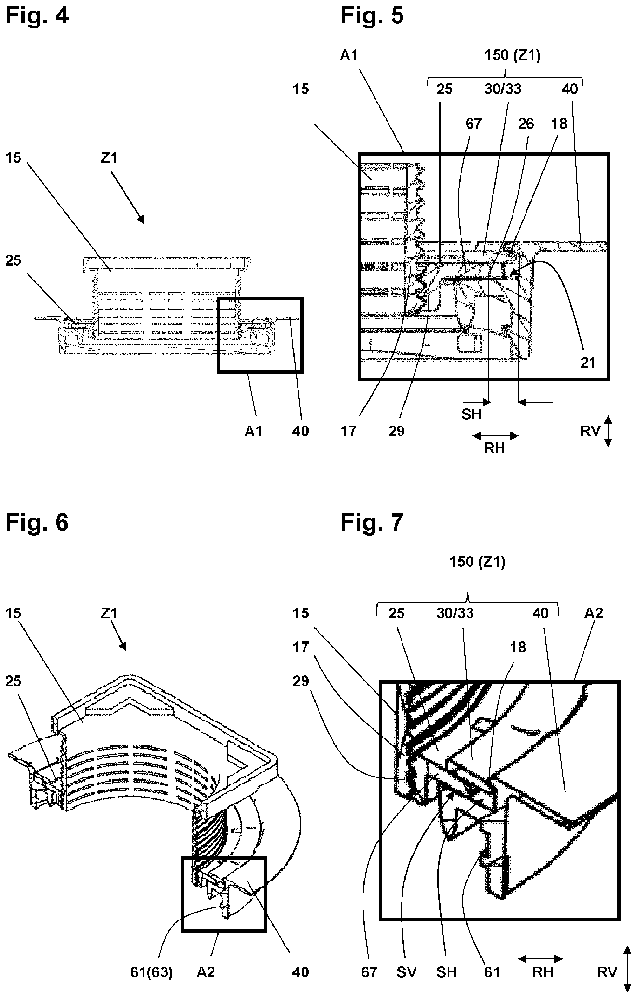

Die Figuren 5 bis 8 erläutern den Aufbau und die Funktionsweise der Justiereinrichtung 150. Dabei zeigt Fig. 5 einen vergrößerten Ausschnitt A1 aus Fig. 4 und Fig. 7 einen vergrößerten Ausschnitt A2 aus Fig. 6.

Die Justiereinrichtung 150 ist im vormontierten Zustand Z1 dargestellt. In diesem vormontierten Zustand Z1 ist das Aufstockelement 15 mit seinem Außengewinde 17 in das Innengewinde 29 des Halters 25 eingeschraubt.

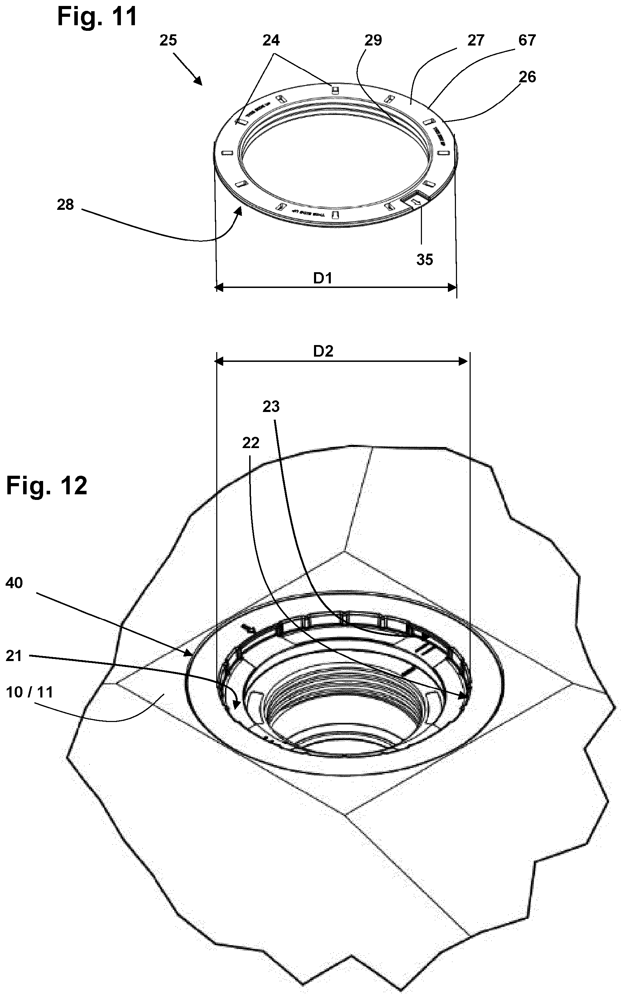

Der Halter 25 weist einen umlaufenden Flansch 67 mit einer Außenkontur 26 auf. Der Flansch 67 liegt im vormontierten Zustand Z1 auf einer in der Aufnahme 40 vorhandenen Auflagefläche 21 (vgl. Fig. 12) auf. Oberhalb des Flansches 26 ist ein mit Vorsprüngen 34 versehener Rastring 33 in zu den Vorsprüngen 34 kompatiblen Vertiefungen 23 der Aufnahme 40 eingerastet. Die Vorsprünge 34 und die Vertiefungen 23 bilden eine Rastverbindung 18 zwischen Rastring 33 und Aufnahme 40.

Rastring 33 und Aufnahme 40 bilden somit eine gehäuseartige Struktur, die in etwa die Form eines liegenden U bzw. einer umlaufenden, zur Mittelachse hin geöffneten Nut hat. Diese Nut umschießt im vormontierten Zustand Z1 den Flansch des Halters 25. Der Halter 25 - und damit auch das Aufstockelement 15 - sind in horizontaler Richtung RH und vertikaler Richtung RV innerhalb der Nut beweglich. Diese Beweglichkeit drückt sich aus durch ein horizontales Spiel SH, das im dargestellten Ausführungsbeispiel 5 mm beträgt sowie ein vertikales Spiel SV, welches weniger als 1 mm beträgt und dazu dient, ein Einklemmen des Flansches 67 zwischen Rastring 33 und Aufnahme 40 zu verhindern.

Das horizontale und das vertikale Spiel bleiben solange erhalten, bis ein Bodenbelag auf die Duschbodenplatte 11 aufgebracht ist. Das heißt: Im Rahmen der Bautätigkeiten werden zunächst die Bodenplatte 10 und die Ablaufvorrichtung 100 installiert. Nachdem die Bodenplatte an Ort und Stelle sitzt und an die Rohrleitung 16 angeschlossen ist, wird ein Bodenbelag (in den Zeichnungen nicht dargestellt) auf die Bodenplatte aufgebracht. Nach Aufbringen des Bodenbelages ist zum einen die Höhenlage der auf dem Aufstockelement 15 aufgelegten Abdeckung 14 durch Einschrauben des Aufstockelements 15 in den Halter 25 exakt an die Höhe des Bodenbelages anpassbar. Weiterhin ist auch die horizontale Positionierung der Abdeckung 14 feinjustierbar, da die Justiereinrichtung 150 sich zu diesem Zeitpunkt nach wie vor im vormontierten Zustand Z1 befindet.

Nachdem die Position der Abdeckung 14 in vertikaler und horizontaler Richtung RV, RH feinjustiert worden ist, werden dann letztlich die noch offenen Fugen um die Abdeckung 14 herum mit einem geeigneten Mörtel verfugt. Damit wird die Justiervorrichtung 150 aus dem vormontierten Zustand Z1 in einen fertig montierten Zustand überführt. Im fertigmontierten Zustand ist die Justiervorrichtung 150 somit fixiert und lediglich die Abdeckung 14 ist noch aus ihrer Halterung demontierbar.

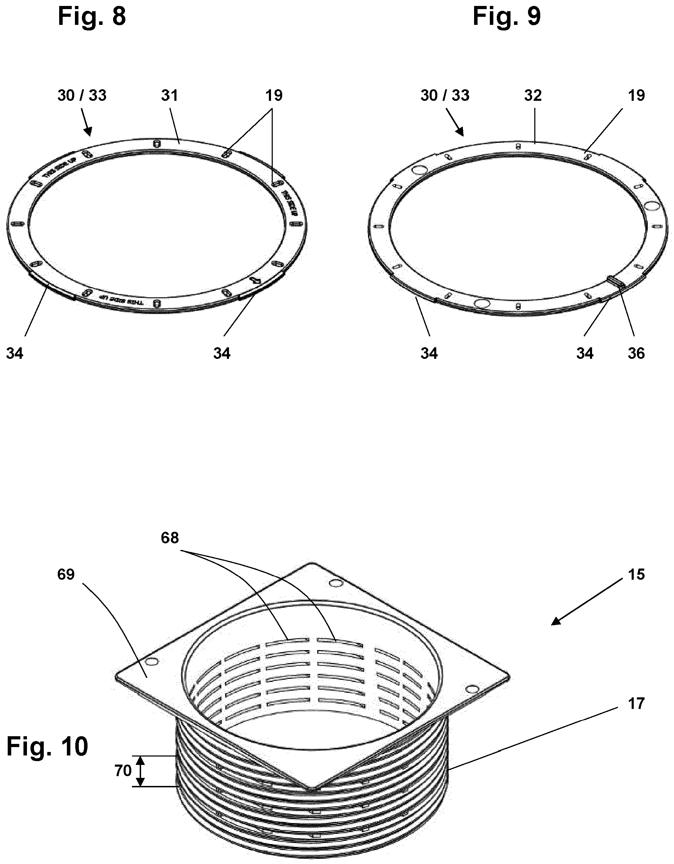

Die Figuren 8 und 9 zeigen ein Fixierelement 30 in Form eines Rastrings 33 in einer perspektivischen Ansicht von schräg oben (Fig. 8) und schräg unten (Fig. 9). Im dargestellten Ausführungsbeispiel ist der Rastring 33 aus einem flexiblen Kunststoff hergestellt und umfasst vier Vorsprünge 34, die in die dazu kompatiblen Vertiefungen 23 der Aufnahme 40 zur Herstellung einer Rastverbindung 18 einsteckbar sind. Weiterhin weist der Rastring 33 einige durchgehende Öffnungen 19 auf, die im fertigmontierten Zustand zur Ableitung von in den Ablauf eindringendem Sickerwasser dienen.

Fig. 9 zeigt zudem einen an der Unterseite 32 des Rastrings 33 angebrauchten Vorsprung 36, der im vormontierten Zustand Z1 der Justiervorrichtung 150 in einer im Halter 25 angebrachten Vertiefung 35 angeordnet ist und dort das horizontale Spiel SH des Halters 25 begrenzt.

Fig. 10 zeigt das Aufstockelement 15, das eine rohrartige Kontur mit einem Außengewinde 17 und einem sich an die rohrartige Kontur anschließenden Flansch 69 aufweist. In die rohrartige Kontur sind Öffnungen 69 eingebracht, die analog zu den Öffnungen 19 im Rastring 33 zur Ableitung von Sickerwasser dienen. Die rohrartige Kontur ist, beispielsweise mit einem Cutter-Messer, an der Baustelle zur Anpassung an die Dicke eines aufzubringenden Bodenbelags um ein Längenstück 70 einkürzbar.

Fig. 11 zeigt den Halter 25, der ebenfalls Öffnungen 24 zur Ableitung von Sickerwasser aufweist. Der Halter 25 weist ein Innengewinde 29 auf, in welches das Aufstockelement 15 einschraubbar ist. Weiterhin umfasst der Halter 25 die bereits angesprochene Vertiefung 35 zur Begrenzung seiner Beweglichkeit in horizontaler Richtung RH. Der Halter 25 weist weiterhin einen Flansch 67 mit einer kreisrunden Außenkontur 26 auf. Die Außenkontur 26 hat einen Durchmesser D1, der kleiner ist, als ein Durchmesser D2 der Aufnahme 40. Der Halter 25 ist somit in die Aufnahme 40 einsetzbar.

Die Figuren 12 bis 14 zeigen die Duschbodenplatte 11 mit eingesetzter Aufnahme 40 in unterschiedlichen Vormontage-Stadien.

In Figur 12 ist lediglich die Aufnahme 40 in die Öffnung 12 der Bodenplatte 10 eingesetzt. Von der unteren Seite der Bodenplatte 10 her ist das Basisteil 20 des Adapters 200 an der Aufnahme 40 angeschraubt. Die Aufnahme 40 hat eine Innenkontur 22 mit einer Auflagefläche 21 und Vertiefungen 23.

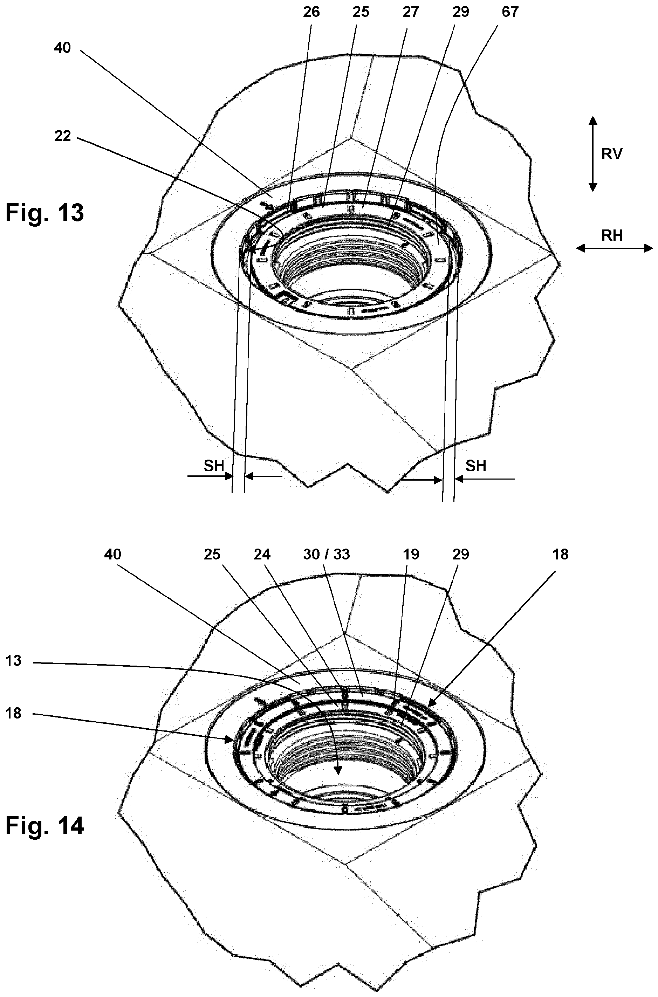

Figur 13 zeigt die Aufnahme 40 mit eingesetztem Halter 25. Der Halter 25 liegt mit seinem Flansch 67 auf der Auflagefläche 21 der Aufnahme 40 auf und ist in horizontaler Richtung RH innerhalb des horizontalen Spiels SH beweglich.

Fig. 14 zeigt die Aufnahme 40 mit einmontiertem Rastring 33. Der Rastring 33 ist über die Rastverbindung 18 lösbar mit der Aufnahme 40 verbunden. Diese Einbausituation stellt den vormontierten Zustand Z1 dar, in dem der Halter 25 (in Fig. 14 nicht dargestellt) in der aus Rastring 33 und Aufnahme 40 gebildeten gehäuseartigen Struktur beweglich und damit bei Bedarf justierbar ist.

Die Figuren 15 bis 23 zeigen den bereits weiter oben angesprochenen Adapter 200 und dessen Bauteile. Der Adapter 200 dient dazu, eine in die Bodenplatte 10 eingesetzten Wassereinlauf wasserdicht an das Ablaufrohr 16 zu koppeln. Der Adapter 200 hat somit zwei Koppelstellen, nämlich die erste Koppelstelle 41, an der er an das Ablaufrohr 16 gekoppelt ist und die zweite Koppelstelle 42, an der er an den Wassereinlauf bzw. an die in den Wassereinlauf integrierte Aufnahme 40, gekoppelt ist (vgl. Fig. 2).

Im dargestellten Ausführungsbeispiel umfasst die Ablaufvorrichtung 100 sowohl eine Justiereinrichtung 150 als auch einen Adapter 200. Weiter oben sind bereits die Details der Aufnahme 40 mit speziellen Merkmalen zur Integration einer Justiereinrichtung 150 erläutert worden. Im Hinblick auf die Justiereinrichtung 150 ist es jedoch unerheblich, ob eine Ablaufvorrichtung, an der die Justiereinrichtung 150 eingesetzt werden soll, einen Adapter 200 umfasst. Analog dazu ist es im Hinblick auf den Adapter 200 auch unerheblich, ob die Ablaufvorrichtung 100 ein Justiereinrichtung 150 umfasst. Beide Baugruppen sind vielmehr universell entweder allein oder gemeinsam in eine Ablaufvorrichtung integrierbar.

Die Figuren 15 und 16 zeigen die Ablaufvorrichtung 100, die zum einen den Adapter 200 umfasst und zum anderen auch dazu vorgesehen ist, eine Justiereinrichtung 150 zu integrieren. Das ist daran ersichtlich, dass die in den Figuren 15 und 16 gezeigte Aufnahme 40 auch Merkmale der Justiereinrichtung 150 umfasst.

Wie bereits erwähnt umfasst der Adapter 200 zwei Koppelstellen 41 und 42. Die Funktion des Adapters 200 im Zusammenhang mit der ersten Koppelstelle 41 liegt darin, eine wasserdichte Verbindung zwischen Basisteil 20 und Ablaufrohr 16 herzustellen. Bei dieser festen Verbindung handelt es sich um die bereits im Zusammenhang mit Fig. 2 angesprochene Pressverbindung 56. In einer einfachen Ausführungsform kann vorgesehen sein, dass die Pressverbindung 56 gegenüber dem Ablaufrohr 16 allein durch einen Adapter mit den Bauteilen Basisteil 20, Dichtring 43 und Pressring 44 realisiert wird. Im dargestellten Ausführungsbeispiel umfasst der Adapter 200 jedoch weiterhin den Spacer 49 und das Einsatzteil 45.

Die Pressverbindung 56 wird realisiert durch eine Schraubverbindung 38. Die Schraubverbindung 38 wird ausgebildet durch ein am Basisteil 20 angeordnetes Innengewinde 54 und ein am Pressring 44 angeordnetes Außengewinde 55. Der Pressring 44 ist somit in das Basisteil 20 eindrehbar. Das Basisteil 20 weist an seiner Unterseite einen unteren Kragen 48 mit einem Innendurchmesser D3 auf, der kleiner ist, als ein am Dichtring 43 vorgesehener Außendurchmesser D4. Bei einem auf das Ablaufrohr 16 aufgesteckten Basisteil 20 mit auf dem Kragen angeordnetem Dichtring 43 kann der Dichtring 43 somit nach unten hin nicht aus dem Basisteil 20 herausgelangen. Er wird vielmehr eingequetscht, wenn der Klemmring 44 tief genug in das Basisteil 20 eingedreht wird. Durch das Verquetschen des Dichtrings 43 ist die bereits angesprochene Pressverbindung 56 realisierbar.

Bei dem in den Figuren 15 und 16 dargestellten Ausführungsbeispiel umfasst der Adapter 200 weiterhin den Spacer 49 und das Einsatzteil 45. Diese Teile sind für die Herstellung der Pressverbindung 56 jedoch nicht zwingend erforderlich. Die Pressverbindung 56 kann vielmehr auch hergestellt werden, indem der Pressring 44 ohne den als Abstandshalter fungierenden Spacer 49 unmittelbar gegen den Dichtring 43 gedrückt wird. Hierzu könnte der Pressring beispielsweise eine zylindrische Kontur aufweisen, die der Kontur des Spacers ähnelt, so dass der Pressring gleichzeitig als Abstandshalter und als Andrückmittel fungiert.

Auch die Einbeziehung eines Einsatzteils 45 in den Adapter 200 ist nicht zwingend erforderlich. Das Einsatzteil 45 ist zum Eindrehen des Pressringes 44 in das Basisteil 20 vorgesehen. Dieses Einsatzteil 45 umfasst Verbindungselemente 46' zur Herstellung einer formschlüssigen Verbindung 47 mit kompatiblen Verbindungselementen 46 am Pressring 44. Zudem umfasst das Einsatzteil 45 eine Aufnahme 59, bei der es sich im dargestellten Ausführungsbeispiel um einen Schlitz zum Ansetzen eines Schraubendrehers handelt. Mittels des Schraubendrehers lässt sich das Einsatzteil 45 und der an das Einsatzteil gekoppelte Pressring 44 einfach in das Basisteil 20 eindrehen.

Das Einsatzteil 45 bildet somit eine Eindrehhilfe aus. Auch ohne Einsatzteil 45 ist der Pressring 44 in das Basisteil 20 eindrehbar. Falls ein Adapter 200 ohne Einsatzteil 45 eingesetzt werden soll, könnte der Pressring 44 beispielsweise einen Ansatz umfassen, auf den ein Eindrehwerkzeug direkt aufsetzbar ist, so dass eine ausreichend starke Pressverbindung auch ohne Verwendung eines Einsatzteils 45 herstellbar ist.

Die Figuren 17 und 18 zeigen das Basisteil 20 des Adapters 200. Am unteren Ende befindet sich der untere Kragen 48, der den Innendurchmesser D3 aufweist. Im montierten Zustand ist der Dichtring 43 auf dem unteren Kragen 48 angeordnet. Weiterhin ist zu erkennen, dass das Basisteil 20 einen oberen Kragen 50 mit einer U-förmigen Vertiefung 65 aufweist, in die eine Dichtung 39 eingeklebt ist.

Das Basisteil 20 weist ein am oberen Kragen 50 angeordnetes Außengewinde 60 auf, das gemeinsam mit einem an der Aufnahme 40 angeordneten Innengewinde 61 eine Schraubverbindung 62 und damit die zweite Koppelstelle 42 bildet. Um diese Koppelstelle 42 wasserdicht abzudichten ist im dargestellten Ausführungsbeispiel die in das Basisteil 20 eingeklebte kreisrunde Dichtung 39 vorgesehen. Beim Eindrehen des Außengewindes 60 in das Innengewinde 61, also beim Eindrehen des Basisteils 20 in die Aufnahme 40, wird die Dichtung 39 gegen eine in der Aufnahme 40 vorgesehene kreisrunde Kontur gedrückt. Mit zunehmender Eindrehtiefe wird die Dichtung 39 so weit komprimiert, dass durch die Ablaufvorrichtung 100 ablaufendes Wasser nicht an der zweiten Koppelstelle 42 aus der Ablaufvorrichtung 100 austreten kann, sondern die zweite Koppelstelle 42 vielmehr zuverlässig abgedichtet ist.

Das Außengewinde 60 ist am oberen Kragen 50 des Basisteils 20 angeordnet und umfasst einen Teil eines Bajonettverschlusses 63. Der andere Teil des Bajonettverschlusses 63 ist in das Innengewinde 61 der Aufnahme 40 integriert (vgl. Fig. 7). Am oberen Kragen 50 befindet sich eine Raste 64, die dann, wenn das Basisteil 20 ausreichend tief in die Aufnahme 40 eingedreht ist, in eine an der Aufnahme 40 vorgesehene Vertiefung einrastet. Das Einrasten der Raste 64 ist beim Eindrehen spürbar, so dass die Person, die die Ablaufvorrichtung 100 montiert, ein haptisches und/oder akustisches Signal für das Erreichen der vordefinierten Eindrehtiefe erhält. Zudem lässt sich das Basisteil 20 nach dem Einrasten der Raste 64 nur noch dann aus der Aufnahme 40 herausdrehen, wenn die Raste 64 zuvor, beispielsweise mittels eines Schraubendrehers, aus der Vertiefung herausgedrückt worden ist. Die Raste 64 sichert das Basisteil 20 somit gegen unbeabsichtigtes Herausdrehen.

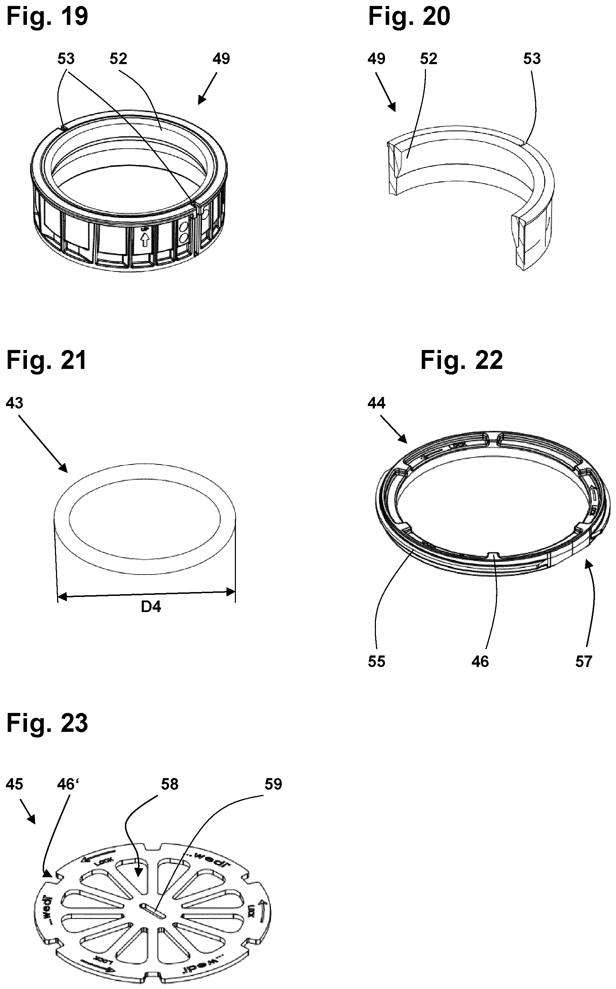

Die Figuren 19 und 20 zeigen den im dargestellten Ausführungsbeispiel vorgesehenen Spacer 49. Der Spacer 49 hat eine zylindrische Form und fungiert als Abstandshalter zwischen Pressring 44 und Dichtring 43. Beim Eindrehen des Pressrings 44 wird der Spacer 49 linear entlang seiner Mittelachse in das Basisteil 20 eingeschoben und drückt schließlich auf den Dichtring 43. Der Dichtring 43 stützt sich wiederum auf dem unteren Kragen 48 des Basisteils 20 ab und wird durch das Einschrauben des Pressrings 44 gequetscht und bildet die Pressverbindung 56. Der Spacer 49 umfasst im dargestellten Ausführungsbeispiel zudem einen eingeklebten Dichtring 52, der so dimensioniert ist, dass er im montierten Zustand eine widerstandsarme Presspassung mit dem Ablaufrohr 16 bildet.

Der Spacer 49 weist zudem zwei Solltrennstellen 53 auf, an denen er, beispielsweise mittels eines Cuttermessers, leicht in zwei halbschalenartige Einzelteile trennbar ist. Wie weiter oben bereits erläutert ist eine solche Teilung des Spacers 49 insbesondere dann hilfreich, wenn bei der Montage versehentlich vergessen wurde, einen Spacer 49 in das Basisteil 20 einzusetzen und zudem die obere Einlauföffnung der Ablaufvorrichtung 100 zu klein ist, um den Spacer 49 nachträglich hindurchzuschieben und am vorgesehenen Ort zu platzieren. Ein in zwei Halbschalen geteilter Spacer 49 kann somit auch durch eine für einen ungeteilten Spacer 49 zu kleine Einlauföffnung geschoben werden.

Die Figur 21 zeigt den Dichtring 43, bei dem es sich um einen aus einem flexiblen Material hergestellten Standard-Dichtring mit einem Außendurchmesser D4 handelt.

Figur 22 zeigt den Pressring 44 mit den an der Oberseite angeordneten Verbindungselementen 46 zur Herstellung der formschlüssigen Verbindung 47 zum Einsatzteil 45. Weiterhin ist am Außengewindes 55 ein abgeflachter Bereich zu erkennen, der einen Teil des Bajonettverschlusses 63 bildet. Das zu diesem Außengewinde 55 kompatible Innengewinde 54 des Basisteils 20 weist analog hierzu ebenfalls einen abgeflachten Bereich auf. Werden Basisteil 20 und Pressring 44 mit leichtem Druck gedreht und geraten sie in die Stellung, in der sich die beiden abgeflachten Bereiche überlagern, rastet der Bajonettverschluss 63 ein und positioniert dabei Basisteil 20 und Pressring 44 so zueinander, dass die Gefahr eines Verkantens - und damit einhergehend: die Gefahr einer Gewindebeschädigung - reduziert wird.

Figur 23 zeigt das Einsatzteil 45 mit den Verbindungselementen 46', bei denen es sich im dargestellten Ausführungsbeispiel um in die äußere Kontur eingebrachte U-förmige Vertiefungen handelt. Weiterhin umfasst das Einsatzteil 45 Öffnungen 58, durch die das durch die Einlauföffnung eingetretene Abwasser in Richtung Ablaufrohr 16 strömen kann. Das Einsatzteil 45 dient somit nicht lediglich zum Einschrauben des Pressrings 44, sondern kann vielmehr nach dem Einschrauben des Pressrings 44 in der Ablaufvorrichtung 100 verbleiben. Hierdurch wird zum einen sichergestellt, dass das Einsatzteil 45 immer da ist, wenn eine Demontage, beispielsweise für Wartungsarbeiten, erforderlich ist. Zum anderen hat das Einsatzteil 45 eine siebartige Wirkung und reduziert Verstopfungsgefahren im Ablaufsystem.

Auf dem Einsatzteil 45 befinden sich weiterhin Pfeile, die die Drehrichtung zum Eindrehen des Pressrings 44 in das Basisteil 20 kennzeichnen. Im vorliegenden Fall ist vorgesehen, dass das Einsatzteil 45 - in Draufsicht gesehen - entgegen dem Uhrzeigersinn zu drehen ist, um die Pressverbindung 56 herzustellen. Wird das Einsatzteil 45 gedreht, so kann jedoch unter bestimmten Voraussetzungen, beispielweise bei einer schwergängigen Schraubverbindung 44, ein Teil des Drehmoments auf das Basisteil 20 übertragen werden. Es ist somit nicht ausgeschlossen, dass das Basisteil 20 sich mitdreht, wenn der Pressring 44 in das Basisteil 20 eingedreht wird. Das Basisteil 20 weist jedoch die weitere Schraubverbindung 62 auf, mittels derer es in die Aufnahme 40 eingeschraubt ist. Um zu verhindern, dass beim Eindrehen des Pressrings 20 die Schraubverbindung 62 gelöst wird, sind die Drehrichtungen der beiden Schraubverbindungen 38 und 62 so konzipiert, dass beim Festdrehen des Pressrings 44 in dem Fall, in dem ein Teil des Drehmoments auf die Schraubverbindung 62, also auf die Verbindungsstelle zur Aufnahme 40, übertragen wird, diese zweite Schraubverbindung 62 nicht etwa gelockert, sondern vielmehr zusätzlich festgezogen wird.

### Bezugszeichenliste

- 10: Bodenplatte
- 11: Duschbodenplatte
- 12: Öffnung (in 10 bzw. 11)
- 13: Einlauföffnung (in 100)
- 14: Abdeckung (für 13)
- 15: Aufstockelement (für 14)
- 16: Ablaufrohr
- 17: Außengewinde (von 15)
- 18: Rastverbindung
- 19: Öffnung (in 30)
- 20: Basisteil (von 200)
- 21: Auflage
- 22: Innenkontur (von 20)
- 23: Vertiefung (in 20)
- 24: Öffnung (in 25)
- 25: Halter (für 15)
- 26: Außenkontur (von 25)
- 27: Oberseite (von 25)
- 28: Unterseite (von 25)
- 29: Innengewinde (von 25)
- 30: Fixierelement
- 31: Oberseite (von30)
- 32: Unterseite (von 30)
- 33: Rastring
- 34: Vorsprung (an 30)
- 35: Vertiefung (in 25)
- 36: Vorsprung (an 30)
- 37: -
- 38: Schraubverbindung (von 44 und 20)
- 39: Dichtung (in 20)
- 40: Aufnahme
- 41: erste Koppelstelle
- 42: zweite Koppelstelle
- 43: Dichtring (in 200)
- 44: Pressring
- 45: Einsatzteil (Sieb)
- 46, 46': Verbindungselement
- 47: Verbindung (von 44 und 45)
- 48: unterer Kragen (an 20)
- 49: Spacer
- 50: oberer Kragen (an 20)
- 51: Rohrstutzen
- 52: Dichtung (in 49)
- 53: Solltrennstelle (an 49)
- 54: Innengewinde (an 20)
- 55: Außengewinde (an 44)
- 56: Pressverbindung
- 57: Bajonettverschluss
- 58: Öffnungen
- 59: Aufnahme (in 45)
- 60: Außengewinde (an 20)
- 61: Innengewinde (an 40)
- 62: Schraubverbindung (von 20 und 40)
- 63: Bajonettverschluss
- 64: Raste
- 65: Vertiefung (an 20)
- 66: Zwischenträger (unter 14)
- 67: Flansch (an 25)
- 68: Öffnungen (in 15)
- 69: Flansch (an 15)
- 70: Längenstück (an 15)

- 100: Ablaufvorrichtung
- 150: Justiereinrichtung
- 200: Adapter

- A1: Ausschnitt (aus Fig. 4)
- A2: Ausschnitt (aus Fig. 5)
- D1: Außendurchmesser (von 25)
- D2: Innendurchmesser (von 40)
- D3: Innendurchmesser (von 48)
- D4: Außendurchmesser (von 43)
- RH: Richtung (horizontal)
- RV: Richtung (vertikal)
- SH: Spiel (in horizontaler Richtung)
- SV: Spiel (in vertikaler Richtung)
- Z1: vormontierter Zustand

## Patentansprüche

1. Ablaufvorrichtung (100), die zum Einbau in eine Öffnung (12) einer Bodenplatte (10), vorzugsweise einer Duschbodenplatte (11), vorgesehen ist und wobei die Ablaufvorrichtung (100) umfasst:
- eine Aufnahme (40) zum Einbau in die Bodenplatte (10) mit einer oberen Einlauföffnung (13),
- im Bodenbereich vormontierte Teile, die strömungstechnisch mit der Aufnahme (40) verbunden und weiter mit einem Ablaufrohr (16) verbindbar sind, so dass durch die Einlauföffnung (13) hindurchgetretenes Abwasser in das Ablaufrohr (16) gelangen kann,
- einen Adapter (200) umfassend:
- ein Basisteil (20) mit einem Innengewinde (54) zur Ausbildung einer ersten Koppelstelle (41) zum Ablaufrohr (16) und einer zweiten Koppelstelle (42) zur Aufnahme (40), wobei das Basisteil (20) im montierten Zustand die Aufnahme (40) an das Ablaufrohr (16) koppelt,
- einen in das Basisteil (20) eingebauten Dichtring (43) zur Abdichtung des Adapters (200) gegenüber dem Ablaufrohr (16),
**dadurch gekennzeichnet, dass**:
- der Adapter (200) weiterhin einen Pressring (44) mit einem zum Innengewinde (54) des Basisteils (20) kompatiblen Außengewinde (55) zur Ausübung einer Druckkraft auf den Dichtring (43) umfasst, so dass der Dichtring (43) mittels des Pressrings (44) gegen das Ablaufrohr (16) andrückbar ist und die erste Koppelstelle (41) eine Pressverbindung (56) umfasst,
- das Innengewinde (54) der ersten Koppelstelle (41) zur Verbindung des Adapters (200) mit dem Ablaufrohr (16) und die zweite Koppelstelle (42) zur Verbindung des Adapters (200) mit der Aufnahme (40) je ein gegenläufig ausgerichtetes Gewinde umfassen, so dass beim Festdrehen einer Koppelstelle (41, 42) die andere Koppelstelle (41, 42) ebenfalls festgedreht wird,.

2. Ablaufvorrichtung (100) nach Anspruch 1, **dadurch gekennzeichnet, dass** der Adapter (200) weiterhin ein im montierten Zustand der Ablaufvorrichtung (100) in das Basisteil (20) oberhalb des Pressrings (44) einbaubares Einsatzteil (45) zum Spannen des in das Basisteil (20) eingebauten Dichtrings (43) umfasst, wobei Pressring (44) und Einsatzteil (45) zueinander kompatible Verbindungselemente (46, 46') zur Herstellung einer formschlüssigen Verbindung (47) aufweisen, so dass ein auf das Einsatzteil (45) ausgeübtes Drehmoment auf den Pressring (44) übertragbar ist.

3. Ablaufvorrichtung (100) nach Anspruch 1 oder 2, **dadurch gekennzeichnet, dass** am Adapter (200) zwischen Dichtring (43) und Pressring (44) ein Spacer (49) vorgesehen ist.

4. Ablaufvorrichtung (100) nach Anspruch 3, **dadurch gekennzeichnet, dass** der Spacer (49) des Adapters (200) eine Dichtung (52) zur Ausbildung einer Führung gegenüber dem Ablaufrohr (16) umfasst.

5. Ablaufvorrichtung (100) nach Anspruch 4, **dadurch gekennzeichnet, dass** die Dichtung (52) in den Spacer (49) des Adapters (200) eingeklebt ist.

6. Ablaufvorrichtung (100) nach einem der Ansprüche 3 bis 5, **dadurch gekennzeichnet, dass** der Spacer (49) des Adapters (200) wenigstens eine Soll-Trennstelle (53) aufweist, an der er teilbar ist.

7. Ablaufvorrichtung (100) nach einem der Ansprüche 1 bis 6, **dadurch gekennzeichnet, dass** die erste Koppelstelle (41) des Adapters (200) einen Bajonettverschluss (57) umfasst.

8. Ablaufvorrichtung (100) nach Anspruch 2 oder nach einem der Ansprüche 3 bis 7, soweit dieser rückbezogen auf Anspruch 2 ist, **dadurch gekennzeichnet, dass** das Einsatzteil (45) Öffnungen (58) zum Auffangen von im Abwasser vorhandenen Verunreinigungen, beispielweise Haare, umfasst, und eine siebartige Wirkung hat.

9. Ablaufvorrichtung (100) nach Anspruch 2 oder nach einem der Ansprüche 3 bis 8, soweit dieser rückbezogen auf Anspruch 2 ist, **dadurch gekennzeichnet, dass** das Einsatzteil (45) eine Aufnahme (59) für ein Werkzeug, insbesondere einen Schraubendreher, aufweist, so dass das Einsatzteil (45) mittels eines Werkzeuges in den Adapter (200) ein- bzw. ausdrehbar ist.

10. Ablaufvorrichtung (100) nach einem der Ansprüche 1 bis 9, **dadurch gekennzeichnet, dass** am Basisteil (20) des Adapters (200) ein Gewinde (60) vorgesehen ist, welches zu einem an der Aufnahme (40) angebrachten Gewinde (61) kompatibel ist, so dass die zweite Koppelstelle (42) durch eine Schraubverbindung (62) ausgebildet wird, die das Basisteil (20) an die Aufnahme (40) koppelt.

11. Ablaufvorrichtung (100) nach Anspruch 10, **dadurch gekennzeichnet, dass** das Gewinde (60) des Basisteils (20) des Adapters (200) ein erster Teil eines Bajonettverschlusses (63) ist, der zu einem an der Aufnahme (40) angebrachten zweiten Teil des Bajonettverschlusses (63) kompatibel ist.

12. Ablaufvorrichtung (100) nach einem der Ansprüche 10 oder 11, **dadurch gekennzeichnet, dass** die zweite Koppelstelle (42) des Adapters (200) eine Raste (64) umfasst, die in eine hierzu kompatible Vertiefung in der Aufnahme (40) einrastbar ist, so dass das in die Aufnahme (40) eindrehbare Basisteil (200) fixierbar und gegen ein Herausdrehen absicherbar ist.

13. Adapter (200) für eine Ablaufvorrichtung (100), die zum Einbau in eine Öffnung (12) einer Bodenplatte (10), vorzugsweise einer Duschbodenplatte (11), vorgesehen ist, umfassend:
- ein Basisteil (20) mit einem Innengewinde (54) zur Ausbildung einer ersten Koppelstelle (41) zu einem Ablaufrohr (16) und eine zweite Koppelstelle (42) zur Ablaufvorrichtung (100), wobei das Basisteil (20) im montierten Zustand die Ablaufvorrichtung (100) an das Ablaufrohr (16) koppelt,
- einen in das Basisteil (20) eingebauten Dichtring (43) zur Abdichtung des Adapters (200) gegenüber dem Ablaufrohr (16),
**dadurch gekennzeichnet, dass**:
- der Adapter (200) einen Pressring (44) mit einem zum Innengewinde (54) des Basisteils (20) kompatiblen Außengewinde (55) zur Ausübung einer Druckkraft auf den Dichtring (43) umfasst, so dass der Dichtring (43) mittels des Pressrings (44) gegen das Ablaufrohr (16) andrückbar ist und die erste Koppelstelle (41) eine Pressverbindung (56) umfasst,
- das Innengewinde (54) der ersten Koppelstelle (41) zur Verbindung des Adapters (200) mit dem Ablaufrohr (16) und die zweite Koppelstelle (42) zur Verbindung des Adapters (200) mit der Ablaufvorrichtung (100) je ein gegenläufig ausgerichtetes Gewinde umfassen, so dass beim Festdrehen einer Koppelstelle (41, 42) die andere Koppelstelle (41, 42) ebenfalls festgedreht wird.

## Claims

1. Drain device (100), which is provided for installation in an opening (12) of a floor panel (10), preferably a shower floor panel (11), and wherein the drain device (100) comprises:
- a receptacle (40) for installation in the floor panel (10) with an upper inlet opening (13),
- parts pre-mounted in the floor area, which are fluidically connected to the receptacle (40) and can be further connected to a drain pipe (16), so that waste water passing through the inlet opening (13) can enter the drain pipe (16),
- an adapter (200) comprising:
- a base part (20) with an internal thread (54) for forming a first coupling point (41) to the drain pipe (16) and a second coupling point (42) to the receptacle (40), wherein the base part (20) couples the receptacle (40) to the drain pipe (16) in the assembled state,
- a sealing ring (43) built into the base part (20) for sealing the adapter (200) with respect to the drain pipe (16),
**characterised in that**
- the adapter (200) further comprises a press ring (44) with an external thread (55) compatible with the internal thread (54) of the base part (20) for exerting a compressive force on the sealing ring (43), so that the sealing ring (43) can be pressed against the drain pipe (16) by means of the press ring (44), and the first coupling point (41) comprises a press connection (56),
- the internal thread (54) of the first coupling point (41) for connecting the adapter (200) to the drain pipe (16) and the second coupling point (42) for connecting the adapter (200) to the receptacle (40) each comprise a thread orientated in opposite directions, so that when one coupling point (41, 42) is tightened, the other coupling point (41, 42) is also tightened.

2. Drain device (100) according to claim 1, **characterised in that** the adapter (200) further comprises an insert part (45) which can be installed in the base part (20) above the press ring (44) in the assembled state of the drain device (100) for clamping the sealing ring (43) installed in the base part (20), wherein the press ring (44) and the insert part (45) have mutually compatible connecting elements (46, 46') for producing a form-fit connection (47), so that a torque exerted on the insert part (45) can be transmitted to the press ring (44).

3. Drain device (100) according to claim 1 or 2, **characterised in that** a spacer (49) is provided on the adapter (200) between the sealing ring (43) and the press ring (44).

4. Drain device (100) according to claim 3, **characterised in that** the spacer (49) of the adapter (200) comprises a seal (52) for forming a guide relative to the drain pipe (16).

5. Drain device (100) according to claim 4, **characterised in that** the seal (52) is glued into the spacer (49) of the adapter (200).

6. Drain device (100) according to one of claims 3 to 5, **characterised in that** the spacer (49) of the adapter (200) has at least one nominal separation point (53) at which it can be divided.

7. Drain device (100) according to one of claims 1 to 6, **characterised in that** the first coupling point (41) of the adapter (200) comprises a bayonet coupling (57).

8. Drain device (100) according to claim 2 or according to one of claims 3 to 7, insofar as this is related back to claim 2, **characterised in that** the insert part (45) comprises openings (58) for collecting impurities present in the waste water, for example hair, and has a sieve-like effect.

9. Drain device (100) according to claim 2 or according to one of claims 3 to 8, insofar as this is related back to claim 2, **characterised in that** the insert part (45) has a receptacle (59) for a tool, in particular a screwdriver, so that the insert part (45) can be screwed into or out of the adapter (200) by means of a tool.

10. Drain device (100) according to one of claims 1 to 9, **characterised in that** a thread (60) is provided on the base part (20) of the adapter (200), which is compatible with a thread (61) attached to the receptacle (40), so that the second coupling point (42) is formed by a screw connection (62), which couples the base part (20) to the receptacle (40).

11. Drain device (100) according to claim 10, **characterised in that** the thread (60) of the base part (20) of the adapter (200) is a first part of a bayonet coupling (63) which is compatible with a second part of the bayonet coupling (63) attached to the receptacle (40).

12. Drain device (100) according to one of claims 10 or 11, **characterised in that** the second coupling point (42) of the adapter (200) comprises a latch (64) which can be latched into a recess in the receptacle (40) which is compatible therewith, so that the base part (20) which can be screwed into the receptacle (40) can be fixed and secured against being unscrewed.

13. Adapter (200) for a drain device (100), which is provided for installation in an opening (12) of a floor panel (10), preferably a shower floor panel (11), comprising:
- a base part (20) with an internal thread (54) for forming a first coupling point (41) to a drain pipe (16) and a second coupling point (42) to the drain device (100), wherein the base part (20) couples the drain device (100) to the drain pipe (16) in the assembled state,
- a sealing ring (43) built into the base part (20) for sealing the adapter (200) with respect to the drain pipe (16),
**characterised in that**
- the adapter (200) comprises a press ring (44) with an external thread (55) compatible with the internal thread (54) of the base part (20) for exerting a compressive force on the sealing ring (43), so that the sealing ring (43) can be pressed against the drain pipe (16) by means of the press ring (44), and the first coupling point (41) comprises a press connection (56),
- the internal thread (54) of the first coupling point (41) for connecting the adapter (200) to the drain pipe (16) and the second coupling point (42) for connecting the adapter (200) to the drain device (100) each comprise a thread orientated in opposite directions, so that when one coupling point (41, 42) is tightened, the other coupling point (41, 42) is also tightened.

## Revendications

1. Dispositif d'écoulement (100) destiné à être monté dans une ouverture (12) d'une plaque de fond (10), de préférence d'une plaque de fond de douche (11), le dispositif d'écoulement (100) comprenant :
- un logement (40) destiné à être monté dans la plaque de fond (10) et comportant une ouverture d'entrée supérieure (13),
- des pièces préassemblées dans la zone du fond, qui sont reliées au niveau de la technique des fluides avec le logement (40) et peuvent être reliées en outre à un tuyau d'écoulement (16), de sorte que les eaux usées qui ont traversé l'ouverture d'entrée (13) peuvent parvenir dans le tuyau d'écoulement (16),
- un adaptateur (200), comprenant :
- une pièce de base (20) avec un filetage intérieur (54) pour former un premier point de couplage (41) avec le tuyau d'écoulement (16) et un deuxième point de couplage (42) avec le logement (40), la pièce de base (20) accouplant le logement (40) au tuyau d'écoulement (16) lorsqu'elle est montée,
- une bague d'étanchéité (43) intégrée dans la pièce de base (20) pour assurer l'étanchéité de l'adaptateur (200) par rapport au tuyau d'écoulement (16),
**caractérisé en ce que**
- l'adaptateur (200) comprend en outre une bague de pression (44) avec un filetage extérieur (55) compatible avec le filetage intérieur (54) de la pièce de base (20) pour exercer une force de pression sur la bague d'étanchéité (43), de sorte que la bague d'étanchéité (43) peut être pressée contre le tuyau d'écoulement (16) au moyen de la bague de pression (44) et que le premier point de couplage (41) comprend un assemblage par pression (56),
- le filetage intérieur (54) du premier point de couplage (41) pour relier l'adaptateur (200) au tuyau d'écoulement (16) et le deuxième point de couplage (42) pour relier l'adaptateur (200) au logement (40) comprennent chacun un filetage orienté dans le sens opposé, de sorte que lorsque l'on serre un point de couplage (41, 42), l'autre point de couplage (41, 42) est également serré.

2. Dispositif d'écoulement (100) selon la revendication 1, **caractérisé en ce que** l'adaptateur (200) comprend en outre une pièce d'insertion (45) pouvant être montée dans la pièce de base (20) au-dessus de la bague de pression (44) lorsque le dispositif d'écoulement (100) est monté, pour serrer la bague d'étanchéité (43) montée dans la pièce de base (20), la bague de pression (44) et la pièce d'insertion (45) comportant des éléments de liaison (46, 46') compatibles entre eux pour réaliser une liaison par complémentarité de forme (47), de sorte qu'un couple exercé sur la pièce d'insertion (45) peut être transmis à la bague de pression (44).

3. Dispositif d'écoulement (100) selon la revendication 1 ou 2, **caractérisé en ce qu'**une entretoise (49) est prévue sur l'adaptateur (200) entre la bague d'étanchéité (43) et la bague de pression (44).

4. Dispositif d'écoulement (100) selon la revendication 3, **caractérisé en ce que** l'entretoise (49) de l'adaptateur (200) comprend un joint (52) pour former un guidage par rapport au tuyau d'écoulement (16).

5. Dispositif d'écoulement (100) selon la revendication 4, **caractérisé en ce que** le joint (52) est collé dans l'entretoise (49) de l'adaptateur (200).

6. Dispositif d'écoulement (100) selon l'une des revendications 3 à 5, **caractérisé en ce que** l'entretoise (49) de l'adaptateur (200) présente au moins un point de séparation théorique (53) au niveau duquel elle peut être divisée.

7. Dispositif d'écoulement (100) selon l'une des revendications 1 à 6, **caractérisé en ce que** le premier point de couplage (41) de l'adaptateur (200) comprend une fermeture à baïonnette (57).

8. Dispositif d'écoulement (100) selon la revendication 2 ou selon l'une des revendications 3 à 7, dans la mesure où celle-ci est liée à la revendication 2, **caractérisé en ce que** la pièce d'insertion (45) comprend des ouvertures (58) pour recueillir les impuretés présentes dans les eaux usées, par exemple les cheveux, et a un effet de tamisage.

9. Dispositif d'écoulement (100) selon la revendication 2 ou selon l'une des revendications 3 à 8, dans la mesure où celle-ci se réfère à la revendication 2, **caractérisé en ce que** la pièce d'insertion (45) présente un logement (59) pour un outil, en particulier un tournevis, de sorte que la pièce d'insertion (45) peut être insérée dans l'adaptateur (200) ou retirée de celui-ci au moyen d'un outil.

10. Dispositif d'écoulement (100) selon l'une des revendications 1 à 9, **caractérisé en ce qu'**un filetage (60) est prévu sur la pièce de base (20) de l'adaptateur (200), qui est compatible avec un filetage (61) prévu sur le logement (40), de sorte que le deuxième point de couplage (42) est formé par un raccord à vis (62) qui couple la pièce de base (20) au logement (40).

11. Dispositif d'écoulement (100) selon la revendication 10, **caractérisé en ce que** le filetage (60) de la pièce de base (20) de l'adaptateur (200) est une première partie d'une fermeture à baïonnette (63) qui est compatible avec une deuxième partie de la fermeture à baïonnette (63) fixée au logement (40).

12. Dispositif d'écoulement (100) selon l'une des revendications 10 ou 11, **caractérisé en ce que** le deuxième point de couplage (42) de l'adaptateur (200) comprend un cran d'arrêt (64) qui peut s'enclencher dans un évidement compatible dans le logement (40), de sorte que la pièce de base (20) pouvant être vissée dans le logement (40) peut être fixée et protégée contre tout dévissage.

13. Adaptateur (200) pour un dispositif d'écoulement (100) destiné à être installé dans une ouverture (12) d'une plaque de fond (10), de préférence une plaque de fond de douche (11), comprenant :
- une pièce de base (20) avec un filetage intérieur (54) pour former un premier point de couplage (41) avec un tuyau d'écoulement (16) et un deuxième point de couplage (42) avec le dispositif d'écoulement (100), la pièce de base (20) accouplant le dispositif d'écoulement (100) au tuyau d'écoulement (16) une fois montée,
- une bague d'étanchéité (43) intégrée dans la pièce de base (20) pour assurer l'étanchéité de l'adaptateur (200) par rapport au tuyau d'écoulement (16),
**caractérisé en ce que**
- l'adaptateur (200) comprend une bague de pression (44) avec un filetage extérieur (55) compatible avec le filetage intérieur (54) de la pièce de base (20) pour exercer une force de pression sur la bague d'étanchéité (43), de sorte que la bague d'étanchéité (43) peut être pressée contre le tuyau d'écoulement (16) au moyen de la bague de pression (44) et que le premier point de couplage (41) comprend un assemblage par pression (56)
- le filetage intérieur (54) du premier point de couplage (41) pour relier l'adaptateur (200) au tuyau d'écoulement (16) et le deuxième point de couplage (42) pour relier l'adaptateur (200) au dispositif d'écoulement (100) comprennent chacun un filetage orienté dans le sens opposé, de sorte que lorsque l'on serre un point de couplage (41, 42), l'autre point de couplage (41, 42) est également serré.
